Europäisches Patentamt

European Patent Office

Office européen des brevets

(19)

(11) Publication number: **0 171 861**
**B1**

(12) **EUROPEAN PATENT SPECIFICATION**

(45) Date of publication of patent specification: 25.10.89

(51) Int. Cl.⁴: **A 01 B 15/14,** A 01 B 61/04, A 01 B 3/42

(21) Application number: **85201316.8**

(22) Date of filing: **16.08.85**

(54) A plough.

(30) Priority: **20.08.84 NL 8402540**

(43) Date of publication of application:
**19.02.86 Bulletin 86/08**

(45) Publication of the grant of the patent:
**25.10.89 Bulletin 89/43**

(84) Designated Contracting States:
**DE FR GB IT NL SE**

(56) References cited:
**EP-A-0 114 156**
**DE-A-2 240 335**
**DE-A-2 537 175**
**DE-B-1 191 152**
**DE-C- 458 500**
**DE-C- 923 280**
**FR-A-1 309 436**
**FR-A-1 490 982**
**FR-A-2 028 763**
**FR-A-2 517 505**
**GB-A-1 371 324**
**US-A-1 547 291**
**US-A-3 517 748**
**US-A-4 030 552**
**US-A-4 141 419**

(73) Proprietor: **C. van der Lely N.V.**
**Weverskade 10 P.O. Box 26**
**NL-3155 ZG Maasland (NL)**

(72) Inventor: **Van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to a plough comprising a frame provided with fastening means for attachment to a tractor and with a plurality of plough bodies, an upwardly directed axis being provided for each of the plough bodies about which axis the respective plough body can be deflected by an adjusting mechanism afforded by an adjusting cylinder and connected to an adjusting rod to adjust the angle of the plough body with respect to the intended direction of operative travel.

A plough of the kind set forth is disclosed in the German patent specification 1 191 152. With this known plough the plough bodies can be brought into a number of positions with respect to the direction of travel of the plough, which positions are fixed regarding the frame of the implement. With ploughs of this kind, the possibility that soil sticks to the plough body is increased with some of the various positions a plough body can have with respect to the direction of travel. Under certain conditions and with a particular position of the plough body, the amount of earth sticking to the plough body can grow in such a way that a proper working is no longer possible.

The invention now has for its object to provide simple means for overcoming the afore-mentioned disadvantage.

In accordance with the invention the adjusting rod is resiliently connected to the adjusting mechanism in a manner such that all the plough bodies are resiliently movable from a middle position about the said upwardly extending axes, the resilient connection comprising at least one spring which is operatively connected to the adjusting cylinder affording the said adjusting mechanism. With this construction each plough body is caused to oscillate slightly by the constantly varying forces exerted during operation, so that earth will adhere less readily to the plough body and the crumbling effect is enhanced. In addition the plough body is less hindered by obstacles.

From the French patent application FR—A—2 517 505 there is known a plough comprising a number of plough bodies, each of which is adjustable about an upwardly extending axis. Further power driven means is provided to give each of the plough bodies a vibratory movement about the said upwardly extending axis. With this known construction a plough body cannot adjust itself to the constantly varying forces exerted during operation by the earth to be worked. Moreover, the mechanical means provided to cause the vibratory movement is rather expensive and complicated.

For a better understanding of the present invention and to show how it may be carried into effect, reference will now be made, by way of example, to the accompanying drawings, in which:

Figure 1 is a plan view of a plough;

Figure 2 is a side view taken in the direction of the arrow II in Figure 1;

Figure 3 shows, on an enlarged scale, a mechanism for laterally displacing plough bodies of the plough;

Figure 4 is an enlarged sectional view taken on the line IV—IV of Figure 1;

Figure 5 is an enlarged sectional view taken on the line V—V in Figure 1;

Figure 6 is a view taken in the direction of the arrow VI in Figure 3; and

Figure 7 is an enlarged view taken in the direction of the arrow VII in Figure 1.

The plough shown in the Figures is constructed in the form of a multi-share reversible plough, and comprises a substantially horizontal main frame beam 1, the longitudinal centre line of which is at an angle of about 30° to the intended direction A of operative travel of the plough. The main frame beam 1 comprises a U-shaped profile 2 formed from sheet material, disposed so that the limbs of the U extend substantially horizontally (Figure 5). The ends of the limbs of the U are turned outwardly at right angles and are fastened by bolts 3 to a plate 4, which covers the whole length of the frame beam 1 and is substantially parallel to the web of the profile 2 extending between the limbs.

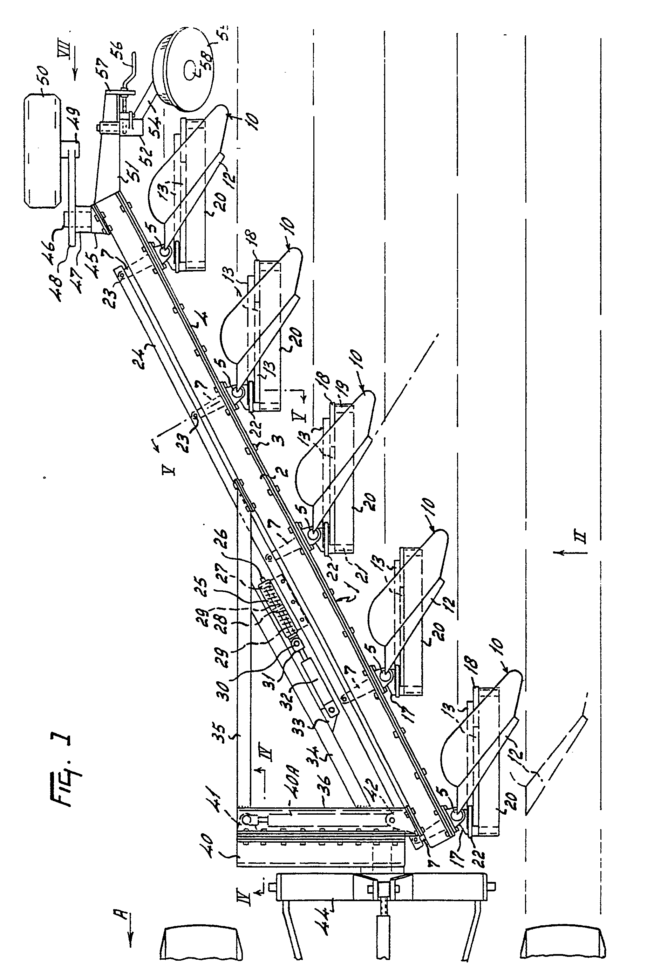

Substantially vertical shafts 5 are mounted on the beam 1, at equal distances from one another, by means of supports 2A secured by the bolts 3 fastening the plate 4 to the turned out ends of the limbs of the U-profile 2. Figure 1 shows that, in total five shafts 5 are provided in this manner, one shaft 5 being situated at the front end of the main frame beam 1 and one shaft 5 being situated near the rear end.

The portion 6 of each shaft 5 between its upper and lower ends is provided on its side nearer the main frame beam 1 with a substantially horizontal, flat arm 7 (Figure 5). The arm 7 passes through slots 8 in the plate 4 and in the web of the U-profile 2 to project from the main frame beam 1.

On the opposite side, the sleeve 6 is provided near the middle with a substantially horizontal shaft 9, the longitudinal centre line of which extends substantially perpendicular to the longitudinal centre line of the main frame beam 1 and is in line with the longitudinal centre line of the arm 7. Each shaft 9 constitutes a support for a pair of plough bodies 10 lying one above the other. The plough bodies 10 of the five pairs can be changed over together, so that they operate to the left and to the right respectively, i.e. soil lifted by the plough is displaced to the left or to the right respectively.

Each of the plough bodies 10 comprises a mould board 11 and a share 12 and is mounted on a supporting arm 13. Each supporting arm 13 has a substantially vertical part which extends upwardly or downwardly from the respective plough body 10. This vertical part is connected at an angular bend to a part which is inclined upwardly or downwardly respectively, and forwardly. Each inclined part is connected at an angular bend to a substantially horizontal part which is directed to the front and is pivotally supported at the front by the shaft 9. The end of the shaft 9 is provided by means of a nut 14 and keys 15 with a stop 16, which, in operation, limits the movement of the horizontal part of the supporting arm 13 for each of the plough bodies shown in the lower position in the Figures.

The stops 16 provide abutments for the pivotable front ends of the supporting arms 13. A stop 17 is provided near the other end of each shaft 9 and near the shaft 5, this stop 17 being mounted on the sleeve 6 which is pivotable about the shaft 9 (Figure 5). The stops 17 provide abutments for the supporting arms 13 of the plough bodies 10, shown in their upper positions in the Figures.

A mounting plate 18 is provided on the rear side of the inclined part of the support arm 13 for the lowermost plough body of each pair. The plates 18 extend upwardly. Near its top end, each mounting plate 18 is provided with a pin 19 around which is arranged a curved end of a leaf spring 20. The leaf spring 20 extends substantially horizontally and its front end has a curved part which receives a pin 21 fastened near the top end of a lug 22 near the front of the arm 13 for the respective upper plough body 10.

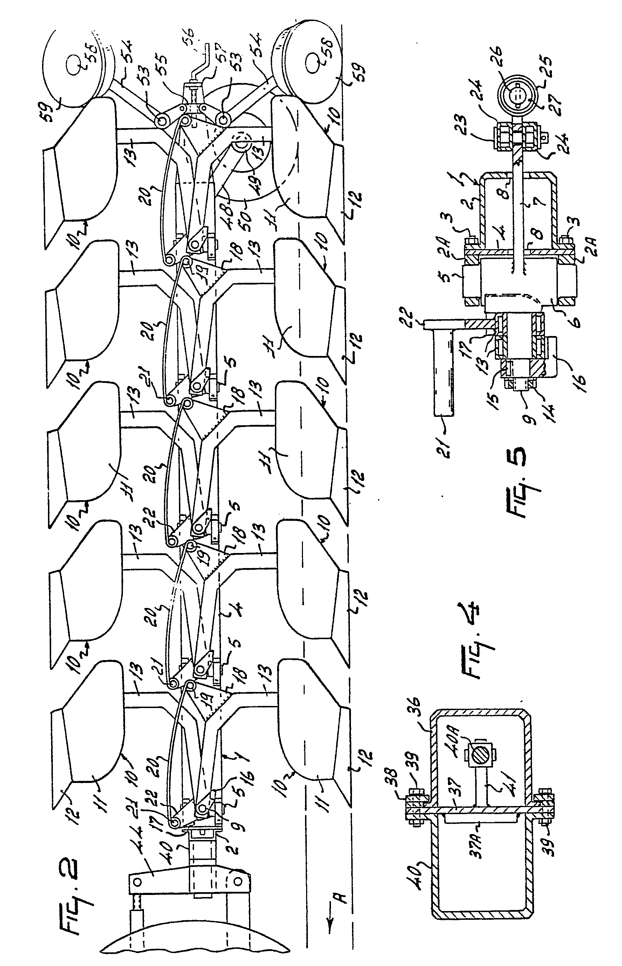

As is shown in Figure 2, the leaf spring 20 curves slightly upwardly in such a way that a resilient mechanism is obtained which connects the two arms 13 and biases them against the stops 16 and 17 respectively.

Each of the arms 7 is pivotally connected by a pin 23 between two hollow profiles 24 (figure 5), which are spaced apart from each other and are substantially parallel to the main frame beam 1. The hollow profiles 24 constitute an adjusting rod 24 for turning the sleeve 6 about the respective shafts 5 and so adjusting the respective plough bodies 10, by displacement of the rod 24 in a direction substantially parallel to the longitudinal centre line of the main frame beam 1. The adjusting rod 24 and the arms 7 constitute an adjusting mechanism for the plough bodies 10. Adjustment can be carried out through an angle of about 20°. Viewed on plan, the respective pivotal axes established by the shafts 5 are situated near the front points of the shares 12 of the respective plough bodies (Figure 1). The adjusting rod 24 is provided, between the second and third pairs of plough bodies 10 from the front, with a tubular part 25, the longitudinal centre line of which is substantially parallel to the longitudinal centre lines of the adjusting rod and the main frame beam 1.

The tubular part 25 holds a rod 26 having a stop 27 at its rear end, which is movable with some clearance in the tubular part 25. Approximately midway along its length, the tubular part 25 has a fixed wall 28, through which the rod 26 extends to project from the tubular part 25. Between the front end of the rod 26 and the wall 28 and between the wall 28 and the stop 27, the rod is surrounded by compression springs 29 to form a spring mechanism, by which the tubular part is resiliently displaceable lengthwise of the rod 26. The front end of the rod 26 has a lug which is connected by a pin 30 between the limbs of a fork 31 provided at one end of the piston rod of a hydraulic adjusting cylinder 32, the other end of which is pivotally mounted on a lug 33 fastened to a beam 34 extending substantially parallel to the main frame beam 1.

The rear end of the beam 34 is connected to a supporting beam 35 extending in the direction A. The beam 35 is fastened at its rear end to the main frame beam 1, at a position approximately midway along its length, by means of a plate and bolts. The beam 35 adjoins, at its front end, a transverse beam 36 extending transversely of the direction A. The transverse beam 36 is bolted to the main beam 1 at a position near its front end, and also supports the front end of the beam 34.

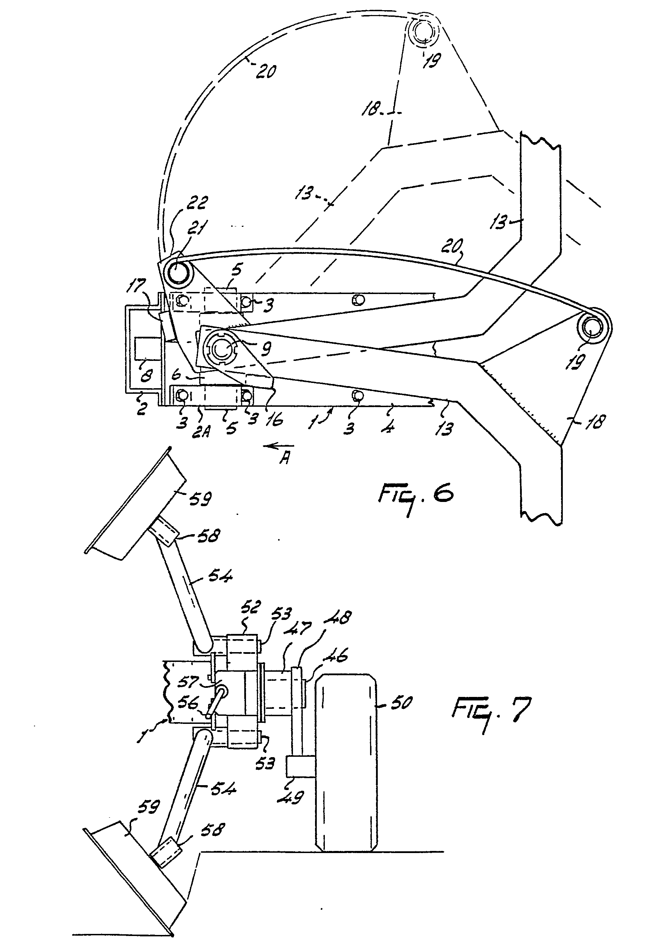

The transverse beam 36 comprises a sheet material U-profile, whose limbs extend to the front (Figure 4). The ends of the limbs are turned outwardly and bear on a plate 37, which extends substantially vertically and is provided at its top and bottom edges with guides 38, which are secured by bolts 39. The bolts 39 also secure a frame beam 40, which, like the frame beam 36, is a U-shaped profile, the limbs of which extend substantially horizontally and are provided at the ends with flanges turned outwardly at right angles. The flanges are fixed by the bolts 39 to the top and bottom edge regions of the plate 37. The above-mentioned U-profiles can be readily and cheaply manufactured, and, while relatively rigid, they allow a low weight of the plough.

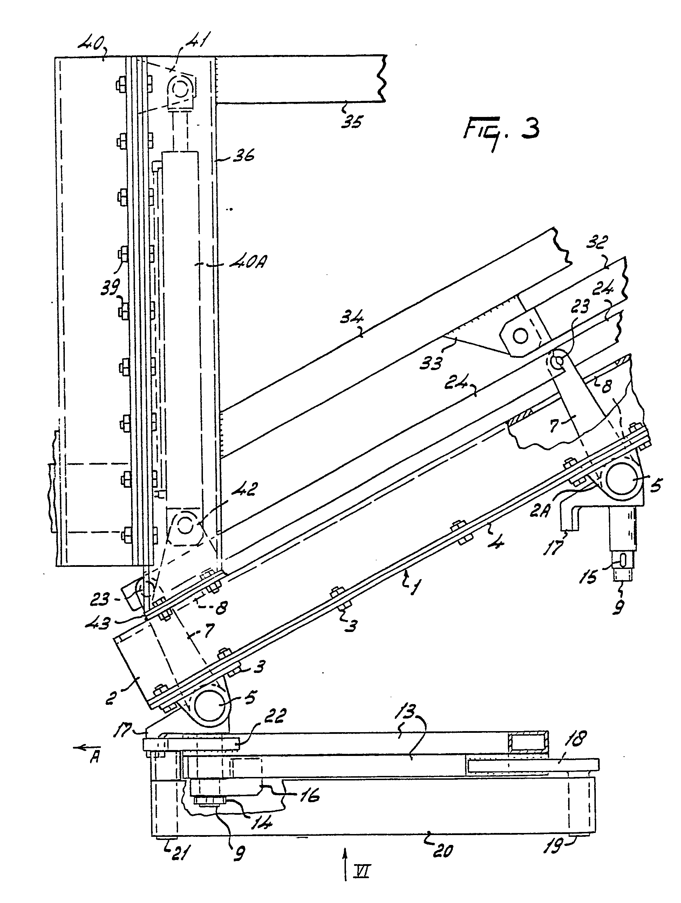

Inside the U-profile the beam 36 accommodates a hydraulic cylinder 40A, one end of which is pivotally mounted on a lug 41, which is fixed to the plate 37 near its centre line and at the end away from the main beam 1. At the lug 41, the plate 37 has a reinforcement 37A (Figure 4). The other end of the hydraulic cylinder 40 is pivotally connected to a lug 42, which is secured on a fastening plate 43 which connects the transverse beam 36 to the front end of the main beam 1 (Figure 3).

By operation of the hydraulic cylinder 40, the assembly of the main beam 1, the transverse beam 36 and the supporting beam 34 can be displaced transversely of the direction A. During this displacement, the top and bottom edges of the transverse beam 36 are guided by the guides 38 and the upwardly extending plate 37. In this manner the plough bodies 10 can be displaced as a whole over a distance of preferably about 50 cms at the most, transversely of the direction A. With the aid of this sliding construction the front plough body 10 can be laterally displaced to an extent such that it follows the endmost dug slice of the preceding run so that the effective overall working width is restricted to the further plough bodies. This is important when a strip of soil remaining at one edge of a field to be ploughed is so narrow that it is necessary to cause a tractor wheel to run on the soil already ploughed. Moreover, the working width of the plough can be reduced so that less power is required, for example when ploughing very heavy soil. Furthermore the plough can be moved for transport purposes into a position such that transport is more readily performed.

The frame beam 40 is pivotally supported on a trestle 44 by a shaft extending in the direction A. The trestle 44 is provided with a three-point fastening means for attaching the plough to the three-point lift of a tractor. The frame carrying the pairs of plough bodies 10 can be turned through 180° about the axis of the shaft by means of a known reversible mechanism (not shown) so that, at the end of a working run using one of the plough bodies 10 of each pair, the other plough body of each pair can be moved into its working position for the next run.

The end of the main beam 1 carries a support 45 which is fastened to the beam 1 by bolts and is disposed on the opposite side of the main beam 1 from the plough bodies 10. The support 45 has a shaft 46, about which a sleeve 47 is pivotable. The sleeve 47 is provided near one end of an arm 48, the other end of which carries an axle 49 extending transversely of the direction A.

A ground wheel 50 is freely rotatable about the axle 49. By turning the arm 48 the ground wheel 50 can be moved about the shaft 46 between two positions, which correspond to the two working positions of the plough bodies 10. Also, the ground wheel 50 can be set in a manner not shown in detail at different heights, so that the working depth of the plough bodies can be determined. The rear end of the main beam 1 also carries an arm 51 which extends to the rear. At its rear end, the arm 51 is provided with an upwardly extending support 52, which extends above and below the arm. Near its top and bottom ends, the support 52 is provided with respective shafts 53 extending transversely of the direction A. A respective pivotable arm 54 is pivotable about each shaft 53. At their adjacent ends, the pivotable arms 54 each have a short arm which is pivotally connected to a part 55 situated centrally between the shafts 53 and having a screw-threaded opening receiving the end of a screw spindle 56. The screw spindle 56 is supported by means of a support 57 on the arm 51.

The respective pivotable arms 54 are inclined rearwardly (Figures 2 and 7) and are provided on the sides facing the plough bodies 10, at the ends away from the arm 53, with a shaft 58. The longitudinal centre lines of the shafts 58 lie in a plane transverse of the direction A. The longitudinal centre lines of the shafts 58 are inclined at an angle of 40 to 45° to the horizontal.

Each shaft 58 carries a supporting member in the form of a wheel 59 having at the circumference a frusto-conical shape with a vertex angle of about 20° so that during operation the circumference of one of the supporting wheels 59 can bear on the inner side of a furrow. Thus the supporting wheel absorbs the reactive forces acting laterally on the plough via the bodies 10 (Figure 7). The presence of the supporting members 59 constructed in the form of wheels enables plough bodies to be used without sole irons so that the adjustability about the upwardly directed shafts 5 is not hindered.

For operation the trestle 44 is coupled with the three-point lifting device of a tractor and the hydraulic adjusting cylinders 32 and 40 are connected by ducts (not shown in detail) with the hydraulic system of the tractor.

The plough is drawn in the direction indicated by the arrow A, with the operative plough bodies 10 penetrating the soil to a given working depth, which can be set with the aid of the ground wheel 50. The operative plough bodies 10 displace the soil to the left. Each of the plough bodies 10 is constructed so that the mould board 11 projects to the side beyond the share 12 so that the upright front wall is at least partly inclined towards the soil still to be ploughed (Figure 7). During this work the respective plough bodies 10 can move from a middle position about the respective vertical shafts 5 against the action of the springs 29 in the tubular part 25. Consequently, the plough bodies 10 can constantly perform a slightly oscillatory movement in operation so that adhesion of earth can be reduced and, in addition, crumbling of the soil is enhanced. It is furthermore possible to escape smaller obstacles.

The position of the respective plough bodies 10 can be changed via the rod 24 by operation of the hydraulic cylinder 32 so as to turn them about the shafts 5 which are disposed, as viewed on plan, at the respective share points. The plough bodies 10 can be moved together through a maximum angle of preferably 20°. In this way, adaption to the prevailing conditions and to the nature of the soil can be obtained from the driver's seat of the tractor. Also, adjustment can be made to match the power required for the plough to the tractor power.

If at the edge of the field a strip of soil is left to be ploughed which does not correspond with the overall working width of the plough, the plough bodies 10 can be displaced (through 50 cms at the most) from the tractor by operation of the hydraulic adjusting cylinder 40 extending transversely of the direction A. This displacement is effected by means of the sliding construction surrounding the beam 36 and the plate 37. This displacement causes the front plough body to travel in a furrow already made. Thus the effective working width of the plough can be reduced to suit the width of the strip still to be ploughed and the tractor can be prevented from running on the ploughed soil and from coming into contact with a fence or from running too closely along a ditch edge. Instead of using five plough bodies, four plough bodies may be employed, so that also by this alternative the required power can be modified without reducing the working depth. For transport the assembly of main beam 1 and the plough bodies 10 can be laterally displaced further beyond the tractor.

If one of the plough bodies 10 encounters an obstacle, this plough body can deflect upwardly by pivotal movement of its supporting arm 13 about the shaft 9, without significantly altering the position of the upper path of the other plough body of the pair. In this way, a single spring mechanism comprising the substantially horizontal leaf spring 20, can permit the required deflection of a plough body 10 while enabling it to return readily into its original position, since the mass to be displaced is relatively small.

With the aid of the readily accessible screw spindle 56 the position of the supporting or furrow wheels 59 can be adapted to the prevailing conditions.

As stated above, at the end of each working run, and after lifting the plough, a turn of 180° can be performed in known manner, so that the row of other plough bodies 10, directed to the right can become operative. Also, the ground wheel 50 has to be turned about the transverse shaft 49 and moved into the new working position. If necessary, the working position of the supporting of furrow wheel 59 can also be adjusted.

## Claims

1. A plough comprising a frame provided with fastening means for attachment to a tractor and with a plurality of plough bodies (10), an upwardly directed axis (5) being provided for each of the plough bodies (10) about which axis the respective plough body (10) can be deflected by an adjusting mechanism afforded by an adjusting cylinder (32) and connected to an adjusting rod (24) to adjust the angle of the plough body (10) with respect to the intended direction of operative travel, characterized in that the adjusting rod (24) is resiliently connected to the adjusting mechanism in a manner such that all the plough bodies (10) are resiliently movable from a middle position about the said upwardly extending axes (5), the resilient connection comprising at least one spring (29) which is operatively connected to the adjusting cylinder (32) affording the said adjusting mechanism.

2. A plough as claimed in claim 1, characterized in that there is a compression spring (29) disposed in a tubular part (25) connected to the adjusting rod (24).

3. A plough as claimed in claim 1 or 2, wherein the said upwardly directed axis (5) is situated on one side of a main frame beam (1), the respective plough body (10) being pivotable about the said axis (5) by means of an arm (7) which passes through a slot (8) in the said main frame beam (1) and is connected to the said adjusting rod (24) which extends along the other side of the main frame beam (1).

4. A plough as claimed in any one of the preceding claims, wherein a shaft (5) affording the said upwardly directed pivotal axis is disposed as seen from above at the tip of a share (12) of the plough body (10).

5. A plough as claimed in any one of the preceding claims, characterized in that near the said upwardly directed pivotable axis (5) for a plough body (10) there is provided a substantially horizontal shaft (9) extending transversely of the intended direction of operative travel of the plough body and about which the respective plough body (10) can deflect to the rear and subsequently return to its original position.

6. A plough as claimed in claim 5, characterized in that it is a reversible plough having at least one pair of plough bodies (10), means being provided which permits a plough body (10) to deflect upon encountering an obstacle and to return into its original position, the said plough body (10) being resiliently connected to the other plough body (10) of the said pair in such a manner that, during the deflection of the said one plough body (10), the other plough body (10) remains substantially in position.

7. A plough as claimed in claim 5 or 6, characterized in that the plough bodies (10) of a said pair are pivotable relative to each other about said substantially horizontal shaft (9), a resilient connection (20) being provided between the plough bodies to bias each of the plough bodies (10) towards a stop (16, 17).

8. A plough as claimed in claim 7, characterized in that the resilient connection (20) comprises a spring mechanism acting between supporting arms (13) for the plough bodies (10), which supporting arms (13) are pivotally mounted about a common shaft (9), stops (16, 17) for the respective plough bodies (10) being provided near the respective ends of the said shaft (9).

9. A plough as claimed in claim 7 or 8, characterized in that the resilient connection (20) comprises a leaf spring, which extends substantially horizontally and is pivotally connected between the said supporting arms (13) for the respective plough bodies (10).

10. A plough as claimed in any one of the preceding claims, characterized in that the plough bodies (10) lack sole irons, a supporting member (59) being provided at the rear of the plough, which supporting member (59) bears on an upwardly extending side of a formed furrow during operation.

11. A plough as claimed in claim 10, characterized in that two supporting members (59) are disposed one above the other, the supporting members being rotatable about rotary axes (58) which lie in a vertical plane extending transversely of the intended direction (a) of operative travel of the plough and which are inclined to the horizontal, an adjusting mechanism (56) being provided between the supporting members (59) for displacing the supporting members (59) about substantially horizontal axes (53).

12. A plough as claimed in claim 11, characterized in that the adjusting mechanism (56) of the supporting members (59) comprises a screw spindle extending substantially horizontally.

## Patentansprueche

1. Pflug mit einem Gestell, das Befestigungsmittel zum Anschluss an einen Traktor und eine Vielzahl von Pflugkörpern (10) aufweist, wobei jeder der Pflugkörper (10) mit einer aufwärts gerichteten Achse (5) versehen ist, um die der jeweilige Pflugkörper (10) mittels einer Einstellvorrichtung aus einem Einstellzylinder (32) und einer damit verbundenen Stellstange (24) verschwenkbar ist, um den Winkel des Pflugkörpers (10) in Bezug zur bestimmten Arbeitsrichtung einzustellen, dadurch gekennzeichnet, dass die Stellstange (24) elastisch mit der Einstellvorrichtung verbunden ist, derart, dass alle Pflugkörper (10) aus einer Mittelstellung heraus um die aufwärts verlaufenden Achsen (5) federnd bewegbar sind, wobei die elastische Verbindung wenigstens eine Feder (29) enthält, die in Wirkverbindung mit dem die Einstellvorrichtung bildenden Einstellzylinder (32) steht.

2. Pflug nach Anspruch 1, dadurch gekennzeichnet, dass eine Druckfeder (29) in einem mit der Stellstange (24) verbundenen rohrförmigen Bauteil (25) angeordnet ist.

3. Pflug nach Anspruch 1 oder 2, wobei die aufwärts gerichtete Achse (5) auf einer Seite eines Hauptrahmenträgers (1) liegt und der entsprechende Pflugkörper (10) über einen Arm (7) um die Achse (5) verschwenkbar ist, wobei der Arm durch einen Schlitz (8) im Hauptrahmenträger (1) verläuft und mit der Stellstange (24) verbunden ist, die sich längs der anderen Seite des Hauptrahmenträgers (1) erstreckt.

4. Pflug nach einem der vorhergehenden Ansprüche, wobei eine die aufwärts gerichtete Schwenkachse bildende Welle (5)—in Draufsicht gesehen—an der Spitze einer Pflugschar (12) des Pflugkörpers (10) liegt.

5. Pflug nach einem der vorhergehenden Ansprüche, dadurch gekennzeichnet, dass nahe der aufwärts gerichteten Schwenkachse (5) eines Pflugkörpers (10) eine im Wesentlichen horizontale Welle (9) vorgesehen ist, die sich quer zur bestimmten Arbeitsrichtung des Pflugkörpers erstreckt und um welche der jeweilige Pflug (10) nach hinten verschwenken und anschliessend in seine Ausgangslage zurückkehren kann.

6. Pflug nach Anspruch 5, dadurch gekennzeichnet, dass er ein Drehpflug mit wenigstens einem Paar von Pflugkörpern (10) ist und Mittel zum Verschwenken eines Pflugkörpers (10) bei Auftreffen auf ein Hindernis und Rückschwenken in seine Ausgangslage aufweist, wobei der Pflugkörper (10) elastisch mit dem anderen Pflugkörper (10) des Pflugkörperpaares derart verbunden ist, dass während einer Verschwenkbewegung des einen Pflugkörpers (10) der andere Pflugkörper (10) im Wesentlichen in seiner Lage verharrt.

7. Pflug nach Anspruch 5 oder 6, dadurch gekennzeichnet, dass die Pflugkörper (10) des Paares relativ zueinander um die im Wesentlichen horizontale Welle (9) verschwenkbar sind und eine federnde Verbindung (20) zwischen den Pflugkörpern vorgesehen ist, um jeden der Pflugkörper (10) gegen einen Anschlag (16, 17) kraftzubeaufschlagen.

8. Pflug nach Anspruch 7, dadurch gekennzeichnet, dass die federnde Verbindung (20) eine zwischen Tragarmen (13) der Pflugkörper (10) wirkende Federanordnung (13) umfasst, wobei die Tragarme (13) schwenkbar auf einer gemeinsamen Welle (9) angeordnet sind und die Anschläge (16, 17) für die entsprechenden Pflugkörper (10) nahe den entsprechenden Enden der Welle (9) vorgesehen sind.

9. Pflug nach Anspruch 7 oder 8, dadurch gekennzeichnet, dass die federnde Verbindung (20) eine Blattfeder umfasst, die sich im Wesentlichen horizontal erstreckt und schwenkbar zwischen den Tragarmen (13) der entsprechenden Pflugkörper (10) befestigt ist.

10. Pflug nach einem der vorhergehenden Ansprüche, dadurch gekennzeichnet, dass die Pflugkörper (10) keine Sohlenstützen haben und auf der Pflugrückseite ein Tragelement (59) vorgesehen ist, welches sich in Arbeitsstellung auf einer aufwärts verlaufenden Wand der gebildeten Furche erstreckt.

11. Pflug nach Anspruch 10, dadurch gekennzeichnet, dass zwei Tragelemente (59) übereinander angeordnet sind und um Drehachsen (58) drehbar sind, die in einer vertikalen Ebene liegen, welche sich quer zu der bestimmten Arbeitsrichtung A) des Pfluges ersreckt und die zur Horizontalen geneigt liegen, und dass zur Lageveränderung der Tragelemente (59) um im Wesentlichen horizontale Achsen (53) eine Einstellvorrichtung (56) zwischen den Tragelementen (59) angeordnet ist.

12. Pflug nach Anspruch 11, dadurch gekennzeichnet, dass die Einstellvorrichtung (56) der Tragelemente (59) eine sich im Wesentlichen horizontal erstreckende Gewindespindel aufweist.

**Revendications**

1. Charrue comprenant un chassis muni de moyens de fixation pour attelage à un tracteur et d'une pluralité de corps de charrue (10), un axe (5) dirigé vers le haut étant prévu pour chacun des corps de charrue (10), axe autour duquel le corps de charrue respectif (10) pourra être détourné au moyen d'un mécanisme de réglage constitué d'un vérin de réglage (32) et relié à une tringle de réglage (24) pour ajuster l'angle du corps de charrue (10) par rapport au sens de marche prévu pour le travail, caractérisée en ce que la tringle de réglage (24) est reliée élastiquement au méncanisme de réglage de telle manière que tous les corps de charrue (10) soient mobiles élastiquement à partir d'une position médiane autour desdits axes (5) s'étendant vers le haut, la liaison élastique comprenant au moins un ressort (29) qui est relié fonctionnellement au vérin de réglage (32) constituant ledit mécanisme de réglage.

2. Charrue selon la revendication 1, caractérisée en ce qu'il y a un ressort à compression (29) disposé dans un élément tubulaire (25) relié à la tringle de réglage (25).

3. Charrue selon la revendication 1 ou 2, dans laquelle ledit axe (5) dirigé vers le haut est situé sur un côté d'une poutre principale (1) du chassis, le corps de charrue (10) respectif étant pivotable autour dudit axe (5) au moyen d'un bras (7) traversant une fente (8) dans ladite poutre principale (1) du chassis et relié à ladite tringle de réglage (24) qui s'étend le long de l'autre côté de la poutre principale (1) du chassis.

4. Charrue selon l'une quelconque des revendications précédentes, dans laquelle un arbre (5) constituant ledit axe de pivotement dirigé vers le haut est disposé, en étant vu de dessus, sur l'extrémité d'un soc (12) du corps de charrue (10).

5. Charrue selon l'une quelconque des revendications précédentes, caractérisé en ce qu'il est prévu, près dudit axe (5) de pivotement dirigé vers le haut pour un corps de charrue (10), un arbre (9) sensiblement horizontal s'étendant transversalement au sens de marche prévu pour le travail du corps de charrue et autour duquel le corps de charrue (10) respectif peut s'écarter vers l'arrière et revenir ensuite dans sa position initiale.

6. Charrue selon la revendication 5, caractérisée en ce qu'elle est une charrue réversible ayant au moins une paire de corps de charrue (10), des moyens étant prévus qui permettent à un corps de charrue (10) de s'écarter en rencontrant un obstacle et de revenir dans sa position initiale, ledit corps de charrue (10) étant relié élastiquement à l'autre corps de charrue (10) de ladite paire de telle manière que, pendant la déviation dudit un corps de charrue (10), l'autre corps de charrue (10) reste pratiquement en position.

7. Charrue selon la revendication 5 ou 6, caractérisée en ce que les corps de charrue (10) d'une dite paire sont pivotables, l'une par rapport à l'autre, autour dudit arbre (9) sensiblement horizontal, une liaison élastique (20) étant prévue entre les corps de charrue pour solliciter chacun des corps de charrue (10) vers une butée (16, 17).

8. Charrue selon la revendication 7, caractérisée en ce que la liaison élastique (20) comprend un mécanisme à ressort agissant entre les bras de support (13) des corps de charrue (10), lesquels bras de support (13) sont montés pivotants autour d'un arbre commun (9), des butées (16, 17) pour les corps de charrue (10) respectifs étant prévues près des extrémités respectives dudit arbre (9).

9. Charrue selon la revendication 7 ou 8, caractérisée en ce que la liaison élastique (20) comprend un ressort à lame qui s'étend sensiblement horizontalement et est relié de manière pivotante entre lesdits bras de support (13) des corps de charrue (10) respectifs.

10. Charrue selon l'une quelconque des revendications précédentes, caractérisée en ce que les corps de charrue (10) sont dépourvus de fers de semelle, un organe de soutien (59) étant prévu à l'arrière de la charrue, lequel organe de soutien (59) prend appui sur un flanc s'étendant vers le haut d'un sillon formé pendant le travail.

11. Charrue selon la revendication 10, caractérisée en ce que deux organes de soutien (59) sont disposés l'un au dessus de l'autre, les organes de soutien pouvant tourner autour d'axes (58) de rotation qui sont situés dans un plan vertical s'étendant transversalement au sens de marche (A) prévu pour le travail de la charrue et qui sont inclinés sur l'horizontale, un mécanisme de réglage (56) étant prévu entre les organes de soutien (59) pour déplacer ces organes de soutien (59) autour d'axes (53) sensiblement horizontaux.

12. Charrue selon la revendiation 11, caractérisée en ce que le mécanisme de réglage (56) des organes de soutien (59) comprend une vis-mère à manivelle s'étendant sensiblement horizontalement.

FIG. 1

FIG. 2

FIG. 4

FIG. 5

FIG. 3

Fig. 6

Fig. 7